Europäisches Patentamt

European Patent Office

Office européen des brevets

(19)

(11) Publication number: **0 010 776**
**B1**

(12) **EUROPEAN PATENT SPECIFICATION**

(45) Date of publication of patent specification: **06.06.84**       (51) Int. Cl.³: **F 16 J  15/20**

(21) Application number: **79104320.1**

(22) Date of filing: **05.11.79**

(54) **A method of manufacturing stuffing box packing rings and a stuffing box packing comprising packing rings so produced.**

(30) Priority: **07.11.78 AU  6676/78**

(43) Date of publication of application:
**14.05.80 Bulletin 80/10**

(45) Publication of the grant of the patent:
**06.06.84 Bulletin 84/23**

(84) Designated Contracting States:
**AT BE CH DE FR GB IT LU NL SE**

(56) References cited:
**DE - U - 1 849 541
FR - A - 1 055 271
US - A - 3 490 986**

**MERKEL, publication Nr. C 127 (6.73-10)6
"Fluor-Kunststoff PTFE" M. MERKEL, Hamburg,
pages 1 to 8
SIMRIT catalogue Nr. 400 "Werkstoff-
Beschreibungen" March 1975, C.
FREUDENBERG, Weinheim**

(73) Proprietor: **UNASCO Pty. Limited
1 Amax Avenue
Girraween New South Wales, 2145 (AU)**

(72) Inventor: **Bentley, Herbert William
1 Amax Avenue
Girraween New South Wales 2145 (AU)**

(74) Representative: **Baillie, Iain Cameron et al,
c/o Langner Parry Isartorplatz 5
D-8000 München 2 (DE)**

Courier Press, Leamington Spa, England.

## Description

The present invention relates to an extruded PTFE (polytetrafluoroethylene) packing.

Existing packing can be in the form of PTFE resin, blended with carbon, graphite, mica or metallic fibres which gives hardness and effective dissipation of generated heat. This material is then extruded to produce a length of packing of desired profile. This particular type of packing has a disadvantage in that it remains soft and pliable which allows it to be squeezed from the gland under pressure in use. Therefore, it has been necessary to include at least one outer retaining ring made from a length of woven packing such as asbestos, cotton or hemp or other such material to keep the packing within the gland. Ideally, a machined ring of sintered PTFE could be used, but this is expensive.

According to Merkel publication C 127(6.73-10)6 "Fluor-Kunststoff PTFE" (M. Merkel, Hamburg), PTFE granulate can be injection-molded or extruded to form bars, tubes, hoses etc. which are sintered. This publication also discloses the use of PTFE as packing for stuffing boxes.

U.S. Patent 3 490 986 indicates that sintered PTFE as a gland-packing material has the disadvantage of becoming age-hardened and inflexible in use, thus limiting the sealing properties of this material.

A stuffing box packing having harder and softer packing rings which are alternatively arranged is known from DE—U—1 849 541. The harder packing rings are made of asbestos or metal, the softer packing rings of unsintered PTFE.

It is an object of the present invention to substantially overcome or ameliorate the aforedescribed disadvantages of the prior art and to provide an improved extruded polytetrafluoroethylene (PTFE) or TEFLON (Registered Trade Mark) packing which is not readily squeezed from the gland in use, and which is advantageously used as an alternative to the outer retaining ring of woven packing to prevent a softer, more pliable PTFE packing being squeezed from the gland under pressure in use.

According to the present invention, there is provided a method of manufacturing stuffing box packing rings comprising extruding a blend of polytetrafluoroethylene (PTFE) resin and at least one filler material, characterized by the following steps:

(i) extruding the blend in the form of a helical coil;

(ii) subsequently sintering said coil;

(iii) cutting said sintered coil into suitable segments.

The invention further provides a stuffing box packing composed of alternate packing rings of different hardness comprising at least two relatively hard packing rings and at least one relatively soft packing ring, characterized in that said at least two relatively hard packing rings are produced as described above.

The invention will now be described by way of example.

According to the invention a blend of PTFE resin and at least one filler material such as carbon, graphite, mica or metallic fillers is extruded through an extrusion device which turns the extrusion upon exit from the die into a helical form, which helical form is subsequently sintered. Sintering can be conducted at any suitable temperature provided that a fully sintered material is produced. Preferably, however, the sintering is carried out at about 400°C.

Packing rings can be made by simply cutting off the desired arc from the sintered coil to suit the stuffing box. The sintered packing rings have the same quality of wear and resistance to chemicals and/or temperature as the unsintered product and have the added advantage in that it will not be readily squeezed from the gland under pressure in use. The sintered packing rings exhibit the same fibrillated properties as the unsintered PTFE packing, which properties constitute a further advantage over a machined ring of sintered PTFE.

The method of manufacturing packing rings according to the invention has the advantage that the sintered extruded material is easily cut to form rings of various sizes necessary to fit any stuffing box. When larger diameter rings are required, the blend of PTFE resin and filler is preferably extruded with a rectangular cross-section with a radial width exceeding the axial thickness.

Preferred fillers of the present invention are selected from carbon, mica, graphite and ground bronze. More preferably, mica is used in pumps or the like which are being used in conjunction with foodstuffs.

In another preferred embodiment of the invention, the PTFE resin constitutes from 50 to 90% by weight of the blend, more preferably 60 to 85% by weight.

In another preferred embodiment of the invention, extrusion may be aided by the use of an oil or solvent, such as rysella oil. The blend can be mixed with about 10% by volume of the oil or solvent before extrusion and subsequent sintering.

In a preferred stuffing box packing, the packing constitutes alternate rings of the sintered PTFE/filler blend of the present invention and extruded rings of an unsintered PTFE resin/filler blend, wherein each outer ring is a sintered one.

The following examples illustrate the present invention.

### Example 1

| PTFE resin | 85% by weight |
|---|---|
| Carbon | 15% by weight |

is blended and subsequently extruded into a coiled form. The extruded coil is then sintered in a furnace at a temperature of about 400°C.

The above coil of sintered material was cut to the required length substantially corresponding to the gland and was found to provide an extremely good retaining ring for the packing rings of the unsintered blend of PTFE resin and filler. The coils of sintered rings were found to substantially prevent the more pliable packing material squeezing from the gland under normal pressure in use.

The following examples illustrate other suitable blends of resin and filler which can be extruded and sintered to yield the improved packing material according to the present invention.

### Example 2

| | |
|---|---|
| Carbon | 13% by weight |
| Graphite | 2% by weight |
| PTFE resin | 85% by weight |

was blended and subsequently mixed with rysella oil in an amount of about 10% by volume of the resin/graphite/carbon blend.

### Example 3

| | |
|---|---|
| PTFE resin | 80% by weight |
| Mica | 20% by weight |

### Example 4

| | |
|---|---|
| PTFE resin | 60% by weight |
| Powdered bronze | 40% by weight |

### Example 5

| | |
|---|---|
| Carbon | 30% by weight |
| PTFE resin | 70% by weight |

## Claims

1. A method of manufacturing stuffing box packing rings comprising extruding a blend of polytetrafluoroethylene (PTFE) resin and at least one filler material, characterized by the following steps:
   (i) extruding the blend in the form of a helical coil;
   (ii) subsequently sintering said coil;
   (iii) cutting said sintered coil into suitable segments.

2. A method as claimed in claim 1 characterized in that the sintering temperature is approximately 400°C.

3. A method as claimed in claim 1 or 2, characterized in that the blend comprises from 50 to 90% by weight of PTFE resin in admixture with at least one filler material selected from carbon, graphite, mica or powdered bronze.

4. A method according to claim 3 characterized in that the blend comprises from 60 to 85% by weight of PTFE resin.

5. A stuffing box packing composed of alternate packing rings of different hardness comprising at least two relatively hard packing rings and at least one relatively soft packing ring, characterized in that said at least two relatively hard packing rings are produced as described in any of claims 1—4.

6. A stuffing box packing according to claim 5, characterized in that said at least one relatively soft packing ring is made of an unsintered blend of PTFE resin and a filler.

## Patentansprüche

1. Verfahren zum Herstellen von Dichtringen für Stopfbuchsen, in dem ein Gemisch aus Polytetrafluorethylenharz (PTFE-Harz) und mindestens einem Füllstoff extrudiert wird, gekennzeichnet durch folgende Schritte:
   (i) Das Gemisch wird in Form einer Wendel extrudiert;
   (ii) die Wendel wird danach gesintert;
   (iii) die gesinterte Wendel wird in geeignete Abschnitte zerschnitten.

2. Verfahren nach Anspruch 1, dadurch gekennzeichnet, daß die Sintertemperatur etwa 400°C beträgt.

3. Verfahren nach Anspruch 1 oder 2, dadurch gekennzeichnet, daß das Gemisch 50 bis 90 Gew.% PTFE-Harz im Gemisch mit mindestens einem Füllstoff enthält, der aus Kohlenstoff, Graphit, Glimmer oder Bronzepulver ausgewählt.

4. Verfahren nach Anspruch 3, dadurch gekennzeichnet, daß das Gemisch 60 bis 85 Gew.% PTFE-Harz enthält.

5. Stoffbuchsendichtung aus aufeinanderfolgenden Dichtringen unterschiedlicher Härte, mit mindestens zwei relativ harten Dichtringen und mindestens einem relativ weichen Dichtring, dadurch gekennzeichnet, daß die mindestens zwei relativ harten Dichtringe nach einem der Ansprüche 1 bis 4 hergestellt sind.

6. Stoffbuchsendichtung nach Anspruch 5, dadurch gekennzeichnet, daß dermindestens eine relativ weiche Dichtring aus einem ungesinterten Gemisch aus PTFE-Harz und einem Füllstoff hergestellt ist.

## Revendications

1. Procédé de fabrication de rondelles pour garniture pour presse-étoupes consistant à extruder un mélange de résine de polytétrafluoréthylène (PTFE) et d'au moins une matière formant charge, caractérisé par les étapes suivantes:
   (i) extrusion du mélange sous la forme d'un enroulement hélicoïdal;

(ii) ensuite frittage dudit enroulement;

(iii) découpage dudit enroulement fritté en segments appropriés.

2. Procédé selon la revendication 1, caractérisé en ce que la température de frittage est approximativement de 400°C.

3. Procédé selon l'une des revendications 1 ou 2, caractérisé en ce que le mélange contient de 50 à 90 % en poids de résine de PTFE mélangé avec au moins une charge choisie parmi du carbone, du graphite, du mica ou de la poudre de bronze.

4. Procédé selon la revendication 3, caractérisé en ce que le mélange contient de 60 à 85 % en poids d'une résine PTFE.

5. Garniture pour presse-étoupe composée de rondelles alternées de différentes duretés comprenant au moins deux rondelles relativement dures et au moins une rondelle relativement molle, caractérisée en ce que au moins les deux rondelles relativement dures précitées sont produites comme décrit dans l'une quelconque des revendications 1 à 4.

6. Garniture pour presse-étoupe selon la revendication 5, caractérisée en ce qu'au moins une garniture relativement molle est formée d'un mélange de résine PTFE et d'une charge qui n'est pas fritté.